# EUROPEAN PATENT SPECIFICATION

(11) **EP 1 610 624 B1**
(45) Date of publication and mention of the grant of the patent: **20.08.2008**
(21) Application number: 03711851.0
(22) Date of filing: 10.03.2003
(51) Int. Cl.: A23K 1/18, A23K 1/16, A23K 1/00

(54) **FISH FEED PELLETS AND METHOD FOR MAKING SAID PELLETS**
FISCHFUTTERGRANULAT UND VERFAHREN ZUR HERSTELLUNG DIESES GRANULATS
GRANULES D'ALIMENT POUR POISSONS ET PROCÉDÉ DE FABRICATION DE CEUX-CI

(43) Date of publication of application: 04.01.2006
(73) Proprietor: Biomar Group A/S, 7330 Brande (DK)
(72) Inventor: HOLGERSEN, Klaus, DK-7100 Vejle (DK)
(74) Representative: Bleukx, Lucas Lodewijk M.
(86) International application number: PCT/DK2003/000146
(87) International publication number: WO 2004/080201

(56) References cited:
- EP-A1- 0 668 025
- WO-A1-02/24000
- WO-A1-95/07028
- WO-A2-98/49904
- GB-A- 2 232 573
- GB-A- 2 324 701

## Description

The present invention relates to fish feed pellets containing up to 55 weight% lipids and a method for its production. In addition to lipids the feed comprises protein, carbohydrates, vitamins and minerals. The major part of the lipids are of marine, animal or vegetable origin being liquid at ambient temperature, but the feed will also contain lipids having a high melting point. The method comprises mixing of the raw material such as proteins, carbohydrates, vitamins, minerals and 0-10 weight% lipids, extrusion of these to form porous pellets and filling of lipids being liquid at ambient temperatures into the pores of the pellets by conventional technique.

The increasing fish farming industry is demanding high energy feed which have led to incorporating increasing amounts of lipid or oil in the feed. The last years there have been a trend to increase the content of lipids in the feed from about 25 weight% to up to 50 weight%. There are several ways of incorporating the lipids in the feed, some might be added to the mixture of raw materials prior to extrusion and the remaining to the pellets either into the pores of the pellets and/or as a coating on the pellets. Regardless of how the lipids have been incorporated in the feed, it has been experienced that when the above large amounts of lipids shall be incorporated, the pellets are leaking oil during storage and transport.

There is known several, quite different approaches and methods for solving the problems related to lipid/oil leakage from high lipid containing feed pellets. One approach comprises addition of components of high melting point to the feed at various stages of the process. Examples of such methods are described in patent publications such as EP 0 793 423 B1 which relates to a method of making a fodder comprising mixing lipids, emulsifier or mixtures thereof with a lipid having a low melting point in a form of an oil and being interactive to form mixture which is at least partly crystallized at the fodders highest temperature of use and storage. The mixture is heated to a liquid state and added to the porous pellets and after having absorbed a desired amount of the mixture, the pellets are then cooled to ambient temperature. The preferred crystalline structure forming component is tempered rape seed oil. The amount of said oil and/or a glyceride is 1-8 %. Though this method seem to reduce the oil leakage somewhat the problem does not seem to be solved.

The disadvantage of this method comprises problems with re-productivity and the amount of additive to obtain the claimed results.

It is also known from EP 0 668 025 A a fish feed comprising proteins, carbohydrates, fat, vitamins and trace elements where the feed prepared is provided with a coating consisting of edible oil which is liquid at least at 40° C. and comprising a saturated triglyceride and/or saturated fatty acid thereof, having a melting point of above 40° C in an amount of at least 0.05% by weight of the total fat content and in an amount which is at least 0.1 % by weight of said coating. The preferred triglyceride is hydrogenated rape seed oil. The fish feed could contain totally 41-43% of fat and about 15% of this fat content can be added prior to extrusion and then about 27% is applied in the coating. When no rape seed oil was applied, the relative loss of oil was 100 and when 7.2% rape seed oil was applied, the relative loss of oil was 31. This method thus reduces the oil leakage, but rather large amounts of rape seed oil have to be applied when the coating contains said high amounts of edible oil and even then there seem to be some leakage.

A third method within the concept of applying oil (fish oil) and rape seed oil is known from EP 0 980 213 relating to fish feed similar to those described above and containing 10-50 % by weight of oil. The method of producing the feed comprise extrusion of a mixture comprising
a) components for forming the basis for the fish feed pellets including a source of carbohydrates and/or a source of protein, and
b) an additive which is solid at ambient temperature selected among a lipid and a fatty acid ; formation of porous pellets and then absorption of oil into the porous pellets for preparation of the fish feed pellets.

Rape seed oil seems to be a preferred additive also for this method. The mixture extruded might contain 0.5-20% of oil. According to the description of this application it is assumed that the lipid or fatty acid additives form oil receiving lipophile structures with the carbohydrates and/or protein components present. It is these structures which later attracts and retain the oil absorbed in the porous pellet in the subsequent oil absorption step. No crystallized structures are formed between the additive and the oil. From the example it is obvious that even this method gives some oil leakage.

The main object of the invention was to arrive at an improved fish feed containing high amounts of edible lipid being retained in the feed during transport and storage.

Another object was to arrive at a method which easily could be implemented in existing feed processes.

These objects could be achieved by the product and the method as defined by the attached claims.

Having studied the problems related to the above described known methods which, however, seemed to reduce the oil leakage problem somewhat, the inventors tried to approach the problem from a new angle for arriving at an improved method. It was then surprisingly found that more oil than previously attained could be retained in the feed pellets when these were produced in conventional manner by mixing the raw materials and extruding these to porous pellets, drying these and filling the pores with oil by vacuum coating or other known methods of bringing the oil into the pores of the pellets. The raw materials include protein and carbohydrate sources which are commonly used in fish feeds. The addition of vitamins and minerals are also within that commonly used. The lipids being liquid at ambient temperature comprises fish oil, vegetable oils and fats usually applied in fish feeds. Part of these lipids might be mixed with the raw materials or added to the extruder. The extrusion is performed in conventional equipment and at known operating condition. The main requirement at this stage of the process being that porous pellets are formed.

The resulting pellets being saturated to a degree of 99.9-95.5% and subsequently given a top coating with a special coating agent. The saturation of the porous pellets with oil can be performed in several steps. This saturation can be performed at vacuum conditions, atmospheric pressure and even pressures being higher than atmospheric pressure.

Useful active components of the top coating were found to comprise a) glyceride having high melting point, or b) free fatty acids such as palmitic acid, stearic acid, behenic acid or mixtures of these or c) crude palm oil. The top coating could also contain mixtures of a, b and c. Said active components of the top coating could also be mixed with fish oil or vegetable oil or mixture of these which could be the same lipids/oils as those absorbed in the pores of the pellets. The amount of the active components a, b and c in the top coating can vary within wide ranges, preferably the mixture applied as top coating contained about 2 parts of the active components and 1 part oil. However, the ratio active components (a, b, c) : oil could be 5-1: 0-5. The preferred ratio was found to be about 2:1. Which implies that the top coating consists of 100-17% by weight of a), b) and/or c), and that said preferred top coating contains of 67% of the active components. The top coating could also contain 0-83% by weight of lipids having a low melting point. The amount of active components in top coating should be within 0.017-4.5% by weight of the total lipid content of the pellets. The preferred amount of active component was found to be 0.38-1 % by weight of the total lipid content of the pellets. The top coating of the pellets were performed by applying conventional coating technique. Preferably the mixture forming the coating was applied to the pellets at 40-70° C, preferably in amounts resulting in a top coating constituting 0.5-1.5% by weight of the total lipid content.

The invention is further envisaged and explained in the following figures and examples.

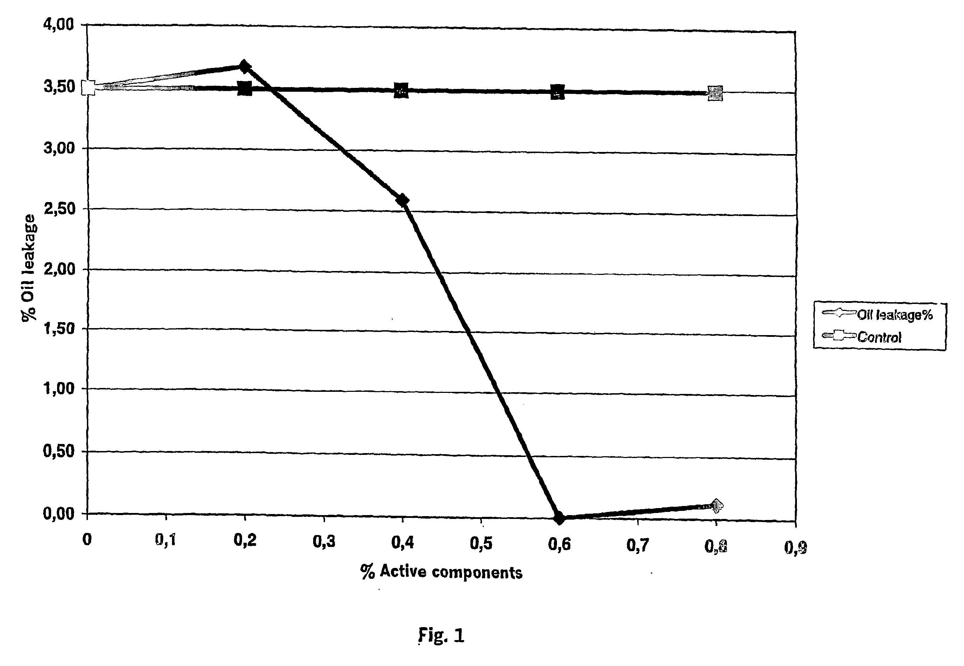

- Figure 1: shows the oil leakage from pellets according to the invention.

### Example 1

Feed pellets made according to the above method were tested with regard to oil leakage. Five samples of pellets, one without a top coating and four with a top coating comprising 0.2-0.8 % by weight of active component (a, b and/or c) of the total lipid content of the pellet. The results shown in table 1 and figure 1 were monitored after two weeks. Dosage % gives the amount of active component applied, and Oil Leakage % shows the resulting leakage of oil:

**Table 1:**

| | Dosage % | Oil Leakage % |
|---|---|---|
| Control | 0 | 3.49 |
| (*) Active components | 0.2 | 3.67 |
| (*) Active components | 0.4 | 2.59 |
| Active components | 0.6 | 0.00 |
| Active components | 0.8 | 0.12 |

| | | |
|---|---|---|
| (*) comparative example | | |

The top coatings were found to reduce the oil leakage substantially even compared with the above known methods. Most remarkable was the fact that far lower amounts of the active components a, b and c had to be applied than the amount of active components having high melting points in the known methods. Using the same active components such as tempered rape seed oil, the present method was equally efficient with lower amounts of that component then when it was dosed in the main coating of the feed pellet..
One important advantage with the present method is the fact that the known pigment loss related to use of glyceride will be reduced when only said small amounts are needed to obtain the desired effect.

## Claims

1. Fish feed pellets comprising proteins, carbohydrates, vitamins, minerals and up to 55% by weight of lipids, the major part being liquid at ambient temperature and comprising oils of marine, animal and/or vegetable origin, and a minor part of the lipids having high melting point,
**characterized in that** 99,9-95,5% by weight of the lipids being liquid at ambient temperature are present in the bulk of the pellets having a top coating constituting 0.5-4.5% by weight of the total lipid content and consisting of 100-17% by weight of a) glyceride or b) free fatty acids and/or c) crude palm oil and where the components a, b and c all have high melting points, and 0-83% by weight of lipids being liquid at ambient temperature

2. Fish feed pellets according to claim 1, **characterized in that** the lipid being liquid at ambient temperature is fish oil in an amount of 25-50 % by weight, and the lipid having high melting temperature and being present in the top coating is tempered rape seed oil.

3. Fish feed pellets according to claim 1, **characterized in that** the top coating constitutes 0.5-1.5 % by weight of the total lipid content of the pellets.

4. Fish feed pellets according to claim 1, **characterized in that** the amount of active components in the top coating constitutes 0.017-4.5% by weight of the total lipid content of the pellet, wherein the active components are a) glyceride or b) free fatty acids and/or c) crude palm oil as defined in claim 1.

5. Fish feed according to claim 1, **characterized in that** the amount of active components in the top coating constitutes 0.38-1 % by weight of the total lipid content of the pellet, wherein the active components are a) glyceride or b) free fatty acids and/or c) crude palm oil as defined in claim 1.

6. A method of making fish feed pellets containing up to 55% by weight of lipids, comprising mixing proteins, carbohydrates, vitamins, minerals and 0-10% by weight of lipids being liquid at ambient temperature and extruding said mixture to pellets which are dried and mixed with lipid being liquid at ambient temperature for absorption into the pores of the pellets, **characterized in that** the porous pellets are exposed to the liquid lipid, such as fish oil, in at least one step until the pellets are saturated to a degree of 99.9-95.5% by said liquid lipid and that said pellets then are cooled and then the pellets are treated with a) glyceride or b) free fatty acids or c) crude palm oil or mixtures of a, b and c and where the components a, b and c all have high melting points, until the pellets get a top coating constituting 0.5-4.5% by weight of the total lipid content of the pellets and consisting of 100-17% by weight of a), b) and/or c) and 0-83% by weight of lipid being liquid at ambient temperature, whereupon the pellets are cooled to ambient temperature.

7. A method according to claim 6, **characterized in that** the mixture for forming the top coating is applied to the pellets at a temperature of 40-70°C in amounts resulting in a top coating constituting 0.5-1.5% by weight of the total lipid content of the pellets.

## Patentansprüche

1. Fischfutterpellets, umfassend Proteine, Kohlenhydrate, Vitamine, Mineralien und bis zu 55 Gew.-% Lipide, wobei der Großteil bei Umgebungstemperatur flüssig ist und Öle aus dem Meer, tierischen und/oder pflanzlichen Ursprungs umfasst und ein geringfügiger Teil der Lipide einen hohen Schmelzpunkt aufweist, **dadurch gekennzeichnet, dass** 99,9 bis 95,5 Gew-% der Lipide, die bei Umgebungstemperatur flüssig sind, in der Masse der Pellets vorhanden sind, die eine obere Beschichtung aufweisen, die 0,5 bis 4,5 Gew.-% des gesamten Lipidgehalts bildet und zu 100 bis 17 Gew.-% aus a) Glycerid oder b) freien Fettsäuren und/oder c) rohem Palmöl, wobei die Bestandteile a, b und c alle hohe Schmelzpunkte aufweisen, und zu 0 bis 83 Gew.-% aus Lipiden besteht, die bei Umgebungstemperatur flüssig sind.

2. Fischfutterpellets nach Anspruch 1, **dadurch gekennzeichnet, dass** das Lipid, das bei Umgebungstemperatur flüssig ist, Fischöl in einer Menge von 25 bis 50 Gew.-% ist und das Lipid, das eine hohe Schmelztemperatur aufweist und in der oberen Beschichtung vorhanden ist, gehärtetes Rapssamenöl ist.

3. Fischfutterpellets nach Anspruch 1, **dadurch gekennzeichnet, dass** die obere Beschichtung 0,5 bis 1,5 Gew.-% des gesamten Lipidgehalts der Pellets bildet.

4. Fischfutterpellets nach Anspruch 1, **dadurch gekennzeichnet, dass** die Menge an aktiven Bestandteilen in der oberen Beschichtung 0,017 bis 4,5 Gew.-% des gesamten Lipidgehalts der Pellets bildet, wobei die aktiven Bestandteile a) Glycerid oder b) freie Fettsäuren und/oder c) rohes Palmöl wie in Anspruch 1 definiert sind.

5. Fischfutterpellets nach Anspruch 1, **dadurch gekennzeichnet, dass** die Menge an aktiven Bestandteilen in der oberen Beschichtung 0,38 bis 1 Gew.-% des gesamten Lipidgehalts des Pellets bildet, wobei die aktiven Bestandteile a) Glycerid oder b) freie Fettsäuren und/oder c) rohes Palmöl wie in Anspruch 1 definiert sind.

6. Verfahren zum Herstellen von Fischfutterpellets, die bis zu 55 Gew.-% Lipide enthalten, umfassend das Mischen von Proteinen, Kohlenhydraten, Vitaminen, Mineralien und 0 bis 10 Gew.-% Lipide, die bei Umgebungstemperatur flüssig sind, und Extrudieren der Mischung zu Pellets, die getrocknet und mit Lipid, das bei Umgebungstemperatur flüssig ist, zur Absorption in die Poren der Pellets gemischt werden, **dadurch gekennzeichnet, dass** die porösen Pellets dem flüssigen Lipid wie Fischöl in mindestens einem Schritt ausgesetzt werden, bis die Pellets bis zu einem Grad von 99,9 bis 95,5 % durch das flüssige Lipid gesättigt sind, und **dadurch**, dass die Pellets danach abgekühlt werden und die Pellets dann mit a) Glycerid oder b) freien Fettsäuren oder c) rohem Palmöl oder Mischungen von a, b und c behandelt werden, wobei die Bestandteile a, b und c alle hohe Schmelzpunkte aufweisen, bis die Pellets eine obere Beschichtung erhalten, die 0,5 bis 4,5 Gew.-% des gesamten Lipidgehalts der Pellets bildet und zu 100 bis 17 Gew.-% aus a), b) und/oder c) und 0 bis 83 Gew.-% aus Lipid besteht, das bei Umgebungstemperatur flüssig ist, wonach die Pellets auf Umgebungstemperatur abgekühlt werden.

7. Verfahren nach Anspruch 6, **dadurch gekennzeichnet, dass** die Mischung zum Bilden der oberen Beschichtung auf die Pellets bei einer Temperatur von 40 bis 70 °C in Mengen aufgetragen wird, die zu einer oberen Beschichtung führen, die 0,5 bis 1,5 Gew.-% des gesamten Lipidgehalts der Pellets bildet.

## Revendications

1. Granules d'aliment pour poissons comprenant des protéines, glucides, vitamines, minéraux et jusqu'à 55% par poids de lipides, la plupart étant du liquide à une température ambiante et comprenant des huiles d'origine marine, animale et/ ou végétale, et une partie mineure des lipides présentant un point de fusion **caractérisé en ce que** 99,9% - 95,5 % du poids des liquides qui sont du liquide à une température ambiante sont présents dans le volume des granules qui ont un revêtement supérieur constitué de 0,5% - 4,5% du poids du contenu total en lipides et constitué de 100 - 17% du poids d'un a) glycéride ou b) d'acides gras libres et/ ou c) d'huile de palme cru et où les composants a, b et c présentent tous des points de fusion élevés et où 0 - 83% du poids des lipides sont un liquide à température ambiante.

2. Granules d'aliment pour poissons conformément à la revendication 1, **caractérisés en ce que** le lipide qui est liquide à une température ambiante est de l'huile de poisson dans un pourcentage de 25 - 50 % du poids et que le lipide qui présente une température de fusion élevée et qui est présent dans le revêtement supérieur est de l'huile de colza revenu.

3. Granules d'aliment pour poissons conformément à la revendication 1, **caractérisés en ce que** le revêtement supérieur constitue 0,5- 1,5 % du poids du contenu total de lipides des granules.

4. Granules d'aliment pour poissons, conformément à la revendication 1, **caractérisés en ce que** la quantité de composants actifs dans le revêtement supérieur constitue 0,017 - 4,5% du poids du contenu de lipides total du granule, où les composants actifs sont du a) glycéride ou b) des acides gras libres et/ ou de l'huile de palme cru tel que défini à la revendication 1.

5. Aliment pour poissons, conformément à la revendication 1, **caractérisé en ce que** la quantité de composants actifs dans le revêtement supérieur constitue 0,38 - 1% du poids du contenu de lipides total du granule, où les composants actifs sont du a) glycéride ou b) des acides gras libres et/ ou de l'huile de palme cru tel que défini à la revendication 1.

6. Procédé de fabrication de granules d'aliment pour poissons contenant jusqu'à 55% du poids en lipides, comprenant un mélange de protéines, glucides, vitamines, minéraux et 0 - 10% du poids de lipides à température ambiante **caractérisé par** l'extrusion dudit mélange pour créer des granules qui sont séchés et mélangés avec des lipides qui sont liquides à une température ambiante pour son absorption dans les pores des granules, **caractérisé en ce que** les granules poreux sont exposés au lipide liquide, tel que de l'huile de poisson dans, au moins, une étape jusqu'à ce que les granules sont saturés jusqu'à un degré de 99,9 - 95,5% par ledit lipide liquide et que lesdits granules sont alors refroidis et, ensuite, les granules sont traités avec du a) glycéride ou b) des acides gras libres ou c) de l'huile de palme cru ou les mélanges de a, b et c et où les composants a, b et c présentent tous des points de fusion élevés, jusqu'à ce que les granules obtiennent un revêtement supérieur constitué de 0,5 - 4,5% par poids du contenu total de lipide des granules et constitué de 100 - 17% du poids de a), b) et/ ou c) et 0- 83% du poids du lipide qui est liquide à une température ambiante, où les granules sont refroidis à une température ambiante.

7. Procédé conformément à la revendication 6, **caractérisé en ce que** le mélange pour la formation du revêtement supérieur est appliqué aux granules à une température de 40 - 70°C dans des quantités qui créent un revêtement supérieur qui constitue 0,5 - 1,5% du poids du contenu total de lipides des granules.
